# EUROPÄISCHE PATENTSCHRIFT

(11) **EP 1 435 474 B1**
(45) Veröffentlichungstag und Bekanntmachung des Hinweises auf die Patenterteilung: **13.05.2009**
(21) Anmeldenummer: 03029394.8
(22) Anmeldetag: 19.12.2003
(51) Int. Cl.: F16F 15/00, F02B 75/06

(54) **Verfahren zur Schwingungsdämpfung eines Antriebsstranges und Antriebsstrang**
Vibration damping method of a drive train and a drive train
Méthode d'amortissement de vibrations dans l'arbre de transmission et arbre de transmission

(30) Priorität: 30.12.2002 DE 10261725; 17.01.2003 DE 10301869
(43) Veröffentlichungstag der Anmeldung: 07.07.2004
(73) Patentinhaber: Volkswagen Aktiengesellschaft, 38436 Wolfsburg (DE)
(72) Erfinder: Schwenger, Andreas, 38446 Wolfsburg (DE); Hinrichsen, Uwe, 38124 Braunschweig (DE)
(74) Vertreter: Hübsch, Dirk

(56) Entgegenhaltungen:
- EP-A- 0 478 945
- EP-A- 1 097 834
- DE-A1- 19 721 298
- US-A- 5 910 993
- US-A1- 2002 095 992

## Beschreibung

Die Erfindung betrifft ein Verfahren zur Schwingungsdämpfung eines Antriebsstrangs und einen Antriebsstrang, insbesondere für ein Kraftfahrzeug arbeitend nach dem zuvor genannten Verfahren.

Aktuelle Steuerungen und Regelungen im Automatikgetriebe moderner Kraftfahrzeuge nutzen eine Sollwert-Nachführung von Drehzahlen oder Momenten im Antriebsstrang. Typische Anwendungsfälle sind beispielsweise die Regelung von absoluten Drehzahlen, etwa die Motordrehzahl bei einer Anfahrregelung, absoluten Momenten bei Kriechreglem oder relativen Drehzahlen wie die Differenzdrehzahl einer Kupplungsreibpaarung. Die bisherigen Regelungsverfahren in Automatikgetrieben sind als klassische "Eingangs-Ausgangs-Größen Regelkreise" realisiert. Jeweils eine Regelgröße wird dabei einem Stellglied zugeordnet. Als Stellglied dient ein hydraulischer, elektrischer oder pneumatischer Aktuator, der von einem Getriebesteuergerät aus angesteuert wird. Es werden dabei Eingrössenregelkreise realisiert.

Die DE 4123254 offenbart eine Steuerung für einzelne oder in Gruppen angeordnete aktive Lagerelemente zur Lagerung von Triebwerken in Kraftfahrzeugen mit Sensoren zur Erfassung von Störschwingungen und fahrzeugspezifischen Leitgrößen, und einer Steuerschaltung zur Verarbeitung der Signale von den Sensoren und jeweils einem Aktuator zur Beeinflussung des bzw. der Lagerelemente in Abhängigkeit vom Ausgangssignal der Steuerschaltung.

In der DE 19544061 wird ein Regelverfahren für einen Kraftfahrzeug-Antriebsstrang vorgeschlagen, bei dem bewußt eine Stellgröße mit einem periodischen Modulationssignal überlagert wird. Eine Anwendung dieses Regelverfahrens ist die CVT (Continous Variable Transmission) Kettenschlupfregelung, bei der die Variatoranpreßkraft bzw. der entsprechende Hydraulikdruck mit einem Modulationssignal überlagert wird. Allerdings bewirkt das Modulationssignal immer auch eine gewisse Anregung von Triebstrang-Schwingungen, die für die Fahrzeuginsassen nicht spürbar sein dürfen. Eine Möglichkeit, diese Nachteile zu vermeiden, liegt in einer Vorsteuerung, d. h. es wird versucht, die durch das Modulationssignal erzeugten Störungen durch ein oder mehrere geeignete Signale auf einer oder mehreren geeigneten Stellgrößen zu kompensieren. Diese Signale werden im Allgemeinen aus dem Modulationssignal und weiteren, vom aktuellen Betriebspunkt des Antriebsstrangs abhängigen Größen berechnet. In der Praxis zeigt sich, daß eine solche Vorsteuerung häufig nicht ausreicht, um Komfortprobleme vollständig zu vermeiden. Beispielsweise wenn entscheidende Größen nicht bekannt sind oder nicht gemessen werden oder ausreichend genaue Modelle des Systemverhaltens nicht existieren oder nicht mit der zur Verfügung stehenden Rechenleistung berechnet werden können.

In der DE-A- 197 21 298 wird ein Verfahren bzw. eine Vorrichtung, nämlich eine Hybrid-Fahrantrieb für ein Kraftfahrzeug beschrieben, wo eine aktive Schwingungsdämpfung realisiert ist. Hierbei umfasst die Steuerung Regelungsmittel, die eine aktive Schwingungsdämpfung der von der Ungleichförmigkeit der Kurbelwellendrehung des Verbrennungsmotors hervorgerufene Schwingung eliminieren sollen.

Der Erfindung liegt daher die Aufgabe zugrunde, das eingangs genannte Verfahren bzw. den eingangs genannten Antriebsstrang derart auszugestalten und weiterzubilden, daß Drehmomente und Drehzahlen im Antriebsstrang geändert werden, ohne jedoch eine Anregung von Eigenfrequenzen des Antriebsstrangs hervorzurufen, und die aktuell vorhandenen Störungen gezielt zu dämpfen, insbesondere also die existenten störenden Schwingungen zu verringern bzw. zu vermeiden.

Diese Aufgabe wird nach der Erfindung durch ein Verfahren zur Schwingungsdämpfung eines Antriebsstrangs mit den Merkmalen des Patentanspruches 1 gelöst. Der erfindungsgemäße Antriebsstrang arbeitet gemäß diesem Verfahren.

In einem Antriebsstrang, insbesondere für ein Kraftfahrzeug, mit einem Motor, mindestens einer Kupplung und einem Getriebe, wobei der Antriebsstrang mehrere Sensoren zur Aufnahme von Meßgrößen und mehrere über Stellgrößen gesteuerte Aktuatoren aufweist, erfolgt nach dem Verfahren eine Schwingungsdämpfung, in dem eine zum Antriebsstrang gehörende Antriebssteuerung die Aktuatoren mittels der Stellgrößen unter Benutzung der Meßgrößen der mehreren Sensoren koordiniert steuert.

Gemäß der Erfindung wird der gesamte Antriebsstrang ganzheitlich behandelt und viele Einzelelemente werden koordiniert gesteuert. Dies ermöglicht es einerseits, auftretenden Schwingungen und Lagestörungen am Ort ihrer Entstehung zu begegnen, da Ort und Größe der Anregung aufgrund der mehreren verteilten Sensoren besser lokalisierbar und quantifizierbar sind. Andererseits ermöglicht die Koordination der mehreren verteilten Aktuatoren, auftretenden Schwingungen und Lagestörungen eben nicht am Ort ihrer Entstehung zu begegnen, sondern die Schwingungen und Lagestörungen durch Gegenmaßnahmen mittels nicht an der Entstehung beteiligter Aktuatoren zu kompensieren.

Durch die Ausgestaltung des Verfahrens und der Vorrichtung mit einer Steuerung der Aggregatelagerung ist eine Schwingungsdämpfung im Antriebsstrang möglich, die allenfalls geringe Anforderungen an den anregenden Aktuator stellt und somit den Fahrerwunsch direkter, mit weniger komfortbedingter Verzögerung, umsetzt.

Eine wichtige Ausgestaltung ist die Erstellung eines mathematischen Modells des Antriebsstrangs zur Antriebssteuerung. Parameteränderungen können berechnet werden und mit Meßwerten verglichen werden. Abweichungen werden erkannt und verwertet zur Fehlererkennung und -behandlung und gegebenenfalls zur Aktivierung einer Fehlermeldung. Dabei können auch interne Modellgrößen durch Parameterschätzverfahren, insbesondere mittels einer Least Mean Square Methode, berechnet werden.

Eine weitere vorteilhafte Ausgestaltung ist die aktive Anregung einer Schwingung oder Störung über einzelne Aktuatoren im Antriebsstrang durch die Antriebssteuerung. Dies ermöglicht es einerseits, dass eine definierte Störung in einem Aktuator oder einem Teilsystem angeregt wird, um das Schwingungsverhalten des Antriebsstrangs zu ermitteln. Dadurch ist es möglich, für definierte Störungen Kompensationen zu entwickeln, im Modell zu berücksichtigen, und der Antriebssteuerung als vorbereitete Lösung zur Verfügung zu stellen. Auch können vorteilhafte Trajektorien für Übergänge von Ist-Werten zu Soll-Werten ermittelt und bereitgestellt werden, die von der Antriebssteuerung angestrebt werden sollen.

Andererseits ermöglicht die aktive Anregung einer Schwingung oder Störung über einzelne Aktuatoren im Antriebsstrang eine Verbesserung der Ermittlung des Eingreifpunkts einer Kupplung, insbesondere bei der oben erwähnten CVT Kettenschlupfregelung, da störende aktiv angeregte Schwingungen nun nicht mehr ausschließlich über den aktiv anregenden Aktuator kompensiert werden müssen, sondern auch mittels weiterer Aktuatoren im Antriebsstrang kompensiert werden können. Hier wird vorteilhaft die Amplitude der aktiv angeregten Schwingung abhängig von mittels Meßgrößen detektierten Schwingungen gesteuert. Es war bisher schwierig, diese Amplitude bei offener Kupplung geeignet zu wählen, da eine zu geringe Amplitude das Greifen der Kupplung nicht zuverlässig erkennen läßt, eine zu hohe Amplitude jedoch leicht beim Greifen zu unkomfortablen Schwingungen führt. Neben der besseren Erkennung durch die koordinierten mehreren Sensoren und der besseren Kompensation durch die koordinierten mehreren Aktuatoren wird zusätzlich ein adaptives Filter, insbesondere mit einer Least Mean Square-Methode, vorgeschlagen, das zur Anregung der aktiv angeregten Schwingung eingesetzt wird. Es wird daher im Grunde eine "Gegenschwingung" zur Dämpfung vorhandener Schwingungen angeregt.

Es gibt nun unterschiedliche Möglichkeiten, das erfindungsgemäße Verfahren bzw. den erfindungsgemäßen Antriebsstrang in vorteilhafter Art und Weise auszugestalten und weiterzubilden. Hierfür darf zunächst auf die jeweilige Patentansprüche verwiesen werden. Weitere Vorteile und Einzelheiten der Erfindung ergeben sich aus den Unteransprüchen und aus der nachfolgenden Beschreibung bevorzugter Ausführungsbeispiele anhand der Zeichnungen. In der Zeichnung zeigt:
- Fig. 1: eine schematische Darstellung eines Antriebsstrangs eines Kraftfahrzeugs mit einer Antriebssteuerung gemäß der Erfindung, und
- Fig. 2: eine schematische Darstellung eines Ausschnitts einer Regelschleife gemäß einer Ausgestaltung der Erfindung.

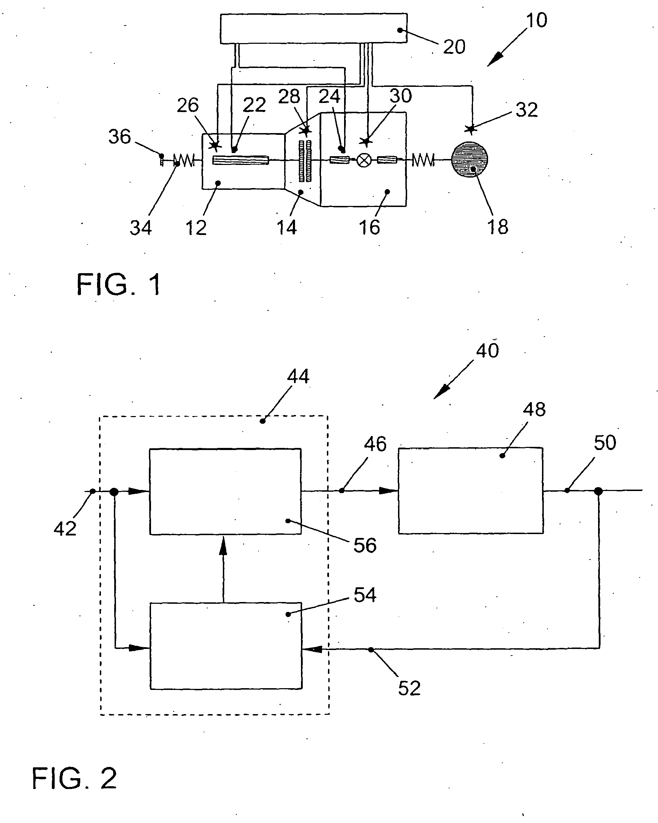

In Fig. 1 ist ein Antriebsstrang eines Kraftfahrzeugs mit einer Antriebssteuerung dargestellt. Der Antriebsstrang 10 weist einen Motor 12, eine Kupplung 14, ein automatisches Getriebe 16, insbesondere ein Doppelkupplungsgetriebe oder ein CVT-Getriebe, einen Abtrieb 18 und eine Antriebssteuerung 20 auf. Der Antriebsstrang 10 hat weiterhin mehrere verteilte Sensoren 22, 24 und mehrere verteilte Aktuatoren 26, 28, 30, 32. Der Antriebsstrang 10 ist über Lager 34 mit der Karosserie 36 des Kraftfahrzeugs verbunden.

Die Antriebssteuerung 20 steuert koordiniert Aktuatoren im Motor 12, in der Kupplung 14, im automatischen Getriebe 16 und in einer Bremse im Abtrieb 18 über dem jeweiligen Aktuator zugeordnete Stellgrößen. Diese werden von der Antriebssteuerung 20 berechnet unter Berücksichtigung von durch die Sensoren 22, 24 aufgenommenen Meßgrößen. Die Antriebssteuerung 20 ist ein Teil des Antriebsstrangs, sie kann jedoch an einer von den anderen Komponenten räumlich entfernten Stelle im Kraftfahrzeug angeordnet sein. Die Antriebssteuerung 20 kann vzw. mit Hilfe eines Steuergerätes, insbesondere eines Getriebesteuergerätes realisiert werden. Das Steuergerät kann hierzu entsprechend elektrische und/oder elektronische Baueinheiten, insbesondere einen Mikroprozessor sowie entsprechende Speichereinheiten zur Speicherung der entsprechenden Daten aufweisen.

Verschiedene Aspekte werden nun dargestellt. Mit Hilfe einer Modellbildung kann das System Antriebsstrang mit seinen Aktuatoren mathematisch beschrieben und simuliert werden. Ein Modell des Antriebsstrangs ist in der Antriebssteuerung 20 im Fahrzeug hinterlegt. Das Modell beschreibt den Normalzustand des Antriebsstrangs. Die Antriebssteuerung 20 berechnet aufgrund des Modells Erwartungswerte für durch die Sensoren 22, 24 aufgenommene Meßgrößen oder daraus abgeleitete Größen. Diese werden mit den Meßwerten der Sensoren 22, 24 für diese Meßgrößen bzw. den daraus abgeleiteten Zustandsgrößen verglichen. Durch diesen Vergleich von simulierten und gemessenen Größen des Modells können Abweichungen vom Normalzustand erkannt werden. Aus der Bewertung der Abweichungen können Parameteränderungen im System, z.B. eine Änderung des Kupplungsreibbeiwerts, berechnet werden. Ferner wird dadurch eine Fehlerdiagnose möglich. So kann beispielsweise bei Unterschreitung des geschätzten Reibwerts unter einen Schwellwert eine Fehlermeldung aktiviert werden. Eine weitere Variante ist eine Fehlerfrüherkennung, wenn der Parameter noch zulässig ist, aber der Verlauf auf eine zukünftiges Erreichen des Grenzwertes deutet.

In manchen Anwendungsfällen können die Modelle oder Teilmodelle nicht komplett oder gar nicht physikalisch beschrieben werden. Um trotzdem interne Modellgrößen zu bestimmen, die zur Ansteuerung benötigt werden, können Paramterschätzverfahren angewendet werden. Eine aus der Akustik bekannte Anwendung ist die Beeinflussung einer Strecke mit Hilfe einer Least Mean Square (LMS) Berechnung oder deren Erweiterungen wie z.B. FXLMS (Filtered -x Least Mean Square). Dieses Verfahren kann sehr effektiv zur Parameterbestimmung benutzt werden. Als Erweiterung folgt dann eine Berechnung von Stellgrößen der Stellglieder im Antriebsstrang auf Basis der bestimmten Parameter. Dabei können sowohl Steuerungen als auch Regelkreise aufgebaut werden. Hierbei wird die Adaption des aus der Akustik bekannten Verfahrens auf Basis des LMS auf Problemstellungen im Antriebsstrang angewendet. Beispielhaft seien hier der Einsatz zur Dämpfung von Schwingungen genannt, die durch zufällige oder aber auch bewußte Einprägung von Störungen im Antriebsstrang entstehen können. Gezielt eingeprägte Signale verändern den aktuellen Betriebspunkt des Antriebsstrangs. Durch das LMS Verfahren ist es möglich, die Parameter der Strecke um diesen Betriebspunkt festzustellen und daraus Maßnahmen zu ergreifen. Ferner kann in einer dann folgenden Steuerung oder Regelung der alte Betriebspunkt nachgeführt werden.

Als wesentliche bisher nach dem Stand der Technik nicht betrachtete Einflußgröße in Ansteuerverfahren wird hierbei die Dynamik des Aggregats, der Motor-Getriebe-Einheit, gegenüber der Karosserie berücksichtigt. Durch die Verlagerung des Aggregats kommt es bei der Drehzahlmessung in Motor und Getriebe zu Verfälschungen. Nur wenn die Dynamik des Aggregats mit berücksichtigt wird, kann der Antriebsstrang richtig beschrieben werden. Es werden daher durch aktive Steuerung der Aggregatelage die Schwingungen des Antriebsstranges gedämpft . Eine Erweiterung der bisherigen Ansteuerverfahren ist die gezielte Beeinflussung der Aggregatelagerung und deren Charakteristika. Aktive Bauelemente zur Aggregatelagerung dienen zur akustischen Entkopplung von Aggregat und Fahrzeugkarosserie. Hierbei soll auch das dynamische Verhalten des Antriebsstrangs, z.B. die Schwingungs- Eigenschaften in Abhängigkeit von der Fahrsituation, durch die Vorgabe von Aggregatelage und Aggregatelageänderung gezielt verändert werden. Dabei findet eine Ansteuerung der Aggregatelagerung statt. Bei passiven Aggregatelagern kann die Lage in Stellalgorithmen gezielt als Regelgröße mit eingebracht werden, und somit das Verhalten des Antriebsstrangs verändert werden.

Die Regelverfahren basieren vorteilhaft auf Anwendungen, die neben den Ein- und Ausgangsgrössen auch innere Strukturen und Größen verwenden, vorzugsweise unter Benutzung eines Zustandsraumes. Hierbei findet eine geschlossene, zustandsgrößenbasierte Regelung bzw. Steuerung einzelner Antriebsstrangkomponenten bzw. des gesamten Antriebsstrangs oder Teilen des Antriebsstrangs statt. Durch einen linearen oder nichtlinearen Reglerentwurf kann das Verhalten des geschlossenen Regelkreises gezielt verändert werden und somit die unerwünschten Eigenschaften der Strecke unterdrückt werden. Dem System Antriebsstrang oder Getriebe werden gezielt dämpfende Eigenschaften eingeprägt. Das schwingungsfähige System wird durch gezielte Stelleingriffe durch die Aktuatoren des Antriebsstrangs aktiv gedämpft. Schwingungen, die ohne diese Maßnahme auftreten würden, können mit dieser Methode vermieden bzw. stark gedämpft werden. In der Regelungstechnik bezeichnet man dieses Vorgehen allgemein als Polstellenverschiebung der Strecke durch Rückführung. Die Pole werden dabei in Richtung der reellen Achse oder genau auf die reelle Achse verschoben.

Störungen werden vorteilhaft als innere Größen des Systems aufgefaßt und in den Modellgleichungen integriert. Sollten Störungen direkt meßbar oder bekannt sein, können diese Werte direkt zur Ansteuerung der Strecke berücksichtigt werden. Durch eine Umrechnung einer gemessenen oder berechneten Störung in eine Aktuatoransteuerung können die Auswirkungen der Störungen teilweise oder vollständig kompensiert werden. Störungen können z.B. durch Stellgliedfehler, Streckenänderungen, etwa über Zeit, Temperatur, Last oder Arbeitspunkt, auftreten. Störungen können aber auch gezielt in den Antriebsstrang eingeprägt werden. Sie werden dann entweder zur Identifikation von Teilsystemen genutzt, wie Hydraulikansteuerungen, Kupplungen und Variatoren, die in stufenlosen Getrieben Verwendung finden, oder wie im Fall eines Gangwechsels bei Stufenautomaten zum gewollten Wechsel von aktiven Kupplungen.

Es werden Mehrgrößenregelkreise vorgeschlagen. Besonders die gleichzeitige Betrachtung von mehreren Sollwerten bei der Benutzung von mehreren Stellgliedern innerhalb einer Regelschleife kann zu einer gezielten Schwingungsdämpfung benutzt werden. Bei einer Anfahrt wird vorteilhaft nach einer Ausgestaltung in einem Mehrgrößenregelkreis eine abtriebsseitige Größe verwendet. Wird z.B. das Achsmoment als Sollwert zusätzlich vorgegeben, kann eine Mehrgrößenregelung die Motordrehzahl und das Abtriebsmoment einstellen. Als Stellglieder bieten sich das Motormoment und die Kupplungskapazität an. Ferner können durch die gezielte Ansteuerung von einem oder mehreren Aktuatoren Momente im Antriebsstrang eingeprägt werden, die dann die dynamischen Eigenschaften des Systems verändern. Dies kann geschehen durch die Ansteuerung mehrerer Kupplungen, beispielsweise bei den Anwendungsfällen Verspannen von Kupplungen gegeneinander, Sperren und Kupplungen in ansteuerbaren Differentialen von Front-, Heck- oder Allradantrieben, Kupplungen und Bremsen in Getrieben, durch die Ansteuerung des Verbrennungsmotors mittels Füllung, Ladedruck, Kraftstoffmenge, Einlaßventilsteuerung, Zündwinkel, durch die Ansteuerung von alternativen Antrieben wie Elektroantrieb oder von Abtrieben, beispielsweise bei Veränderungen von Aufnahmemomenten von Pumpen in Motoren und Getrieben etwa durch Erhöhung des Arbeitsdrucks oder eines Kühlvolumenstroms. Es können sämtliche Stellgrößen, die eine Beeinflussung des Antriebsstrangmomentes bewirken, berücksichtigt werden.

Eine besondere Ausgestaltung des Verfahrens ist die Möglichkeit der Trajektorienvorgabe. D.h. nicht nur der Endwert der Regelgrößen wird vorgegeben, sondern der gesamte zeitliche transiente Verlauf. Dadurch wird eine wesentliche Dynamikerhöhung möglich. Für die Ansteuerung einer Kupplung ergibt sich damit die Vorgabe z.B. von Solldifferenzdrehzahl und Solldifferenzbeschleunigung, oder von einer der Kupplungsseite zugeordneten Drehzahl und Beschleunigung.

Das neue Ansteuerverfahren setzt sich aus einzelnen oder Kombinationen der oben beschriebenen Teilmaßnahmen zusammen.

Das Verfahren der Erweiterten Ansteuerung des Antriebsstrangs unter Berücksichtigung interner physikalischer und abstrakter Größen zur Beeinflussung des Übertragungsverhaltens findet in unterschiedlichen Fahrzuständen Anwendung, beim Start von Antriebsmotoren (Verbrennungsmotor oder Elektrisch), insbesondere bei hybriden Antriebsstrangkonzepten, beim Anfahren, Kriechen, Gangwechsel, bei Übersetzungsänderungen (CVT), bei Laständerungen, oder bei Fahrt mit Differenzdrehzahl an einer oder mehreren Reibpaarungen, bei Fahrstufenänderungen, beim Ausrollen oder beim Anhalten.

Neben den oben erwähnten Stellgrößen können weitere Aktuatoren verwendet werden. Dazu zählen unterschiedliche Motormomentenänderungen - positiv und negativ - von einem oder mehreren am Antriebsstrang wirkenden Motoren, insbesondere bei Hybridkonzepten, Bremseingriffe an den An- und/oder Abtriebsrädern, in Getrieben verbaute Aktuatoren, wie Naß.- und Trockenkupplungen, formschlüssige Kupplungen, z.B. Klauenkupplung, Getriebebremsen, Wandlerüberbrückungskupplungen, Gang- Ein- und Auslegeaktuatorik und Übersetzungsverstellungsaktuatorik, z.B. Variator beim CVT.

Besondere Vorteile zeigen sich in speziellen Anwendungsfällen. Insbesondere ist hier die erste Eigenfrequenz des Antriebsstrangs zwischen 5 - 10 Hz zu nennen, die vom Fahrer als störendes Ruckeln empfunden wird. Die Anregung dieser Schwingung kann durch das Schließen oder auch das Öffnen einer Kupplung im Antriebsstrang unter Last erfolgen. Die Anwendung eines der oben beschriebenen Verfahren führt zu einer erheblichen Komfortsteigerung. Ferner können Geometriefehler, Bauteiltoleranzen und -parameter erkannt und ausgeglichen werden. Vorteilhaft wird die Dämpfung dieser Schwingung im Modell besonders berücksichtigt.

Eine weitere Ursache für angeregte Schwingungen kann der dynamische Verlauf des Motordrehmoments und/oder der Kupplungskapazität sein. Bei Automatikgetrieben werden während einer Anfahrt oder dem Gangwechsel genau diese Momentenänderungen und/oder Kupplungsmomentenänderungen dem Antriebsstrang eingeprägt und dies führt zu unerwünschten Schwingungen. Bei starker Reduktion des Motormomentenaufbaus wird der Komfort erheblich verbessert, es kommt jedoch zu unerwünscht großen Verzögerungen in der Beschleunigung. Der zeitliche Verlauf der eingeprägten Momente ist entscheidend für den Komfort bzw. die Sportlichkeit der Aktion (Schaltung, Anfahrt, Fahrt).

Ein besonders wichtiger Fall ist die Regelung der Abtriebsdrehzahlen und/oder des Antriebsmomentes der Achswellen. Da der Moment im Serienfahrzeug nicht sensiert wird, muß durch die Winkeldifferenz und die Steifigkeit der Abtriebswelle ein Ersatzwert gebildet werden. Diese Methode der Regelung kann sowohl bei geschlossenem als auch bei teilgeöffnetem Antriebsstrang angewendet werden, insbesondere beim Anfahren und beim Schalten. Durch Anwendung der beschriebenen Verfahren ist ein wesentlich robusteres und komfortables Verhalten zu erzielen.

Werden Teilelemente des Antriebsstrangs bewußt durch Ansteuerungen angeregt um deren Teilreaktionen zu untersuchen, können mit den oben beschriebenen Verfahren die nicht erwünschten Auswirkungen auf andere Elemente des Antriebsstrangs vermindert oder eliminiert werden. Neben dem Testsignal und der Teitelementreaktion können aufgrund der dann nötigen Stelleingriffe der überlagerten Ansteuerung weitere Informationen über das Teilelement gewonnen werden. Sollen z.B. Kupplungsdaten erfaßt werden, kann dies durch eine bewußte Anregung der Kupplungsaktuatorik geschehen. Zum Ausgleich und zur Minimierung von dann auftretenden Drehzahländerungen im Abtrieb ist eine Ansteuerung eines nachfolgenden Elektromotors möglich, insbesondere bei einem Hybrid-Konzept.

Als Stellgrößen für Mehrgrößenregelkreise kommen alle Größen einzeln oder in Kombination in Frage, die direkt oder indirekt das Radmoment beeinflussen, beispielsweise
- Motordrehmoment-beeinflussende Größen, umfassend Zündwinkel, KraftstoffEinspritzmenge, Drosselklappenstellung, elektrischer Strom eines Elektromotors;
- Kupplungsdrehmoment-beeinflussende Größen, umfassend Kupplungsdruck, Kupplungsweg, Größen von Getriebe-Schaltelementen oder Radbremsen; Größen von Schaltelementen in Sperren, insbesondere bei Vierradantrieb; -Schlupf beeinflussende Größen in schlupfenden Elementen, umfassend einen Anpreßdruck eines Varistors;
- Übersetzung beeinflussende Größen, umfassend einen Verstelldruck eines Variators;
- Größen, die den Wirkungsgrad in Bezug auf die Antriebsleistung im Triebstrang beeinflussen, umfassend Anpreßkraft eines Variators, aufgenommene Generatorleistung, aufgenommene Klimakompressorleistung, aufgenommene Leistung von Hilfsenergielieferanten beeinflussenden Größen wie Pumpenleistung, z.B. Ausgangsdruck einer Getriebe-Hydraulikpumpe, Schleppmomente in Reibelementen beeinflussende Größen z.B. durch aktive Ansteuerung im Bereich niedriger Momente oder durch Änderung eines Kühl- oder Schmierölstroms;
- Aggregatelagerung.

Zu den Größen, die den Wirkungsgrad in Bezug auf die Antriebsleistung im Triebstrang beeinflussen, sei bemerkt, dass bei konstanter Motorleistung eine Erhöhung der Verluste eine Reduktion der Radleistung bedeutet.

Als Meßgrößen für Mehrgrößenregelkreise kommen alle Größen einzeln oder in Kombination in Frage, die mit dem Modulationssignal und / oder einer komfortkritischen Größe korreliert sind, beispielsweise
- Drehzahlen, umfassend Motor-, Kupplungs-Primär-, Eingangswellen-, Scheibensatz-, Triebwellen-, Abtriebs-, Rad-Drehzahlen;
- aus Drehzahl-Messgrößen berechnete Größen, umfassend Kupplungs-Schlupf als Drahzahldifferenz, Variator-Übersetzung als Drehzahlquotient;
- Drehmomente, umfassend Drehmomente in einer beliebigen Welle des Triebstrangs;
- Zwischengrößen in der Ansteuerkette, umfassend Stöme, Drücke, Wege der Kupplung, Ersatzgrößen der Kupplungskapazität; und
- Meßgrößen, die von Reaktionskräften und Momenten der Antriebsräder abhängen, umfassend eine Aggregatelage, Kräfte in einem Aggregatelager, Kräfte in einer Radaufhängung.

Nun wird eine bevorzugte Ausgestaltung vorgestellt für die Regelungen, bei denen bewußt eine Größe mit einem -. meist periodischen - Modulationssignal überlagert wird. Das Modulationssignal bewirkt immer auch eine gewisse Anregung von Triebstrang-Schwingungen, die für die Fahrzeuginsassen nicht spürbar sein dürfen. Diese Anregung kann z.B. durch kleine Änderungen der Drehzahlübersetzung in Folge der Anpreßkraftmodulation entstehen, oder z.B. durch mit dem Modulationssignal veränderte Leistungsaufnahme einer Hydraulikpumpe, was bei konstanter Motorleistung in veränderten Radmomenten resultieren kann.

In dieser Ausgestaltung wird die Verwendung eines Adaptions- oder Regelverfahrens zur Vermeidung der Komfortprobleme vorgeschlagen, das alternativ oder zusätzlich zu einer Vorsteuerung verwendet werden kann. Ein bevorzugter Anwendungsfall ist die CVT-Kettenschlupfregelung, bei der die Variatoranpreßkraft bzw. der entsprechende Hydraulikdruck mit einem Modulationssignal z.B. rechteckförmig überlagert wird. Ein CVT-Getriebe kann damit an der Haftgrenze bei günstigem Wirkungsgrad und Verschleiß betrieben werden, indem die Anpreßkraft solange langsam abgesenkt wird, bis in den Minima des Modulationssignals gerade ein erhöhter Kettenschlupf auftritt. Dieser Zustandsübergang ist relativ scharf und kann z.B. an dem Verlauf der Drehzahlübersetzung relativ zu dem Modulationssignal erkannt werden.

Nach dieser Ausgestaltung werden neben mindestens einer Stellgröße eine oder mehrere Meßgrößen verwendet, die von den Störungen, die die Komfortprobleme schaffen, abhängen. Während die reine Vorsteuerung bereits eine Stellgröße benötigt, werden zusätzlich eine oder mehrere Meßgrößen eingesetzt, was nun ein Adaptions- und Regelverfahren ermöglicht. Nach dieser Ausgestaltung ist es nicht notwendig, aber möglich und in vielen Fällen sinnvoll, auch bei Adaptionen und Regelungen das die Störungen anregende Modulationssignal im Adaptierer oder Regler zu verwenden, da dieses den Entwurf eines guten Adaptierers oder Reglers i.A. erleichtert.

Fig. 2 zeigt eine schematische Darstellung eines Ausschnitts einer Regelschleife 40 gemäß einer Ausgestaltung für Regelungen, bei denen bewußt eine Größe mit einem -. meist periodischen - Modulationssignal überlagert wird. Ein Modulationssignal wird einem ersten Eingang 42 eines adaptiven Filters 44 zugeführt. Das adaptive Filter 44 liefert an seinem Ausgang 46 ein Stellsignal, welches auf einen Aktuator einer Regelstrecke 48 gegeben wird. Das Verhalten der Regelstrecke 48 wird durch einen Sensor erfaßt, der an einem Signalausgang 50 der Regelstrecke 48 eine Meßgröße liefert, die einem zweiten Eingang 52 eines adaptiven Filters 44 zugeführt wird. Das adaptive Filter 44 weist ein einen Adaptierer 54 und ein digitales Filter 56 auf, wobei der Adaptierer 54 das digitale Filter 56 steuert. Der Adaptierer 54 ermittelt, ob in der Meßgröße, noch Anteile bzw. Einflüsse des Modulationssignals enthalten sind. Falls ja, steuert er das digitale Filter 56 und damit die Stellgröße so, dass diese Anteile bzw. Einflüsse kleiner werden und im Idealfall verschwinden.

Für ein Adaptionsverfahren kann vorteilhafterweise z.B. ein adaptives Filter mit LMS-Algorithmus eingesetzt werden, wie es aus dem Bereich "aktive Geräuschdämpfung" bekannt ist. Als Meßgröße kann beispielsweise das mittlere Radmoment, und als Stellgröße kann beispielsweise das Motordrehmoment verwendet werden. Das Verfahren arbeitet dann vereinfacht wie folgt: Der Adaptierer 54 ermittelt, ob in der Meßgröße, hier dem Radmoment, noch Anteile bzw. Einflüsse des Modulationssignals enthalten sind. Falls ja, steuert er das digitale Filter 56 und damit die Stellgröße, hier das Motordrehmoment, so, dass diese Anteile bzw. Einflüsse kleiner werden und im Idealfall verschwinden. Das adaptive Filter 44 verändert also die Amplitude des Modulationssignals derart, dass es zur Detektion ausreicht, aber keine unkomfortablen Schwingungen auslöst.

Das adaptive Filter bzw. der Komfortregler darf die Wirkung der Modulation nicht im gesamten Triebstrang vollständig auslöschen. Deshalb wird die mit dem Modulationssignal beaufschlagte Größe i.A. verschieden von der Stellgröße des adaptiven Filters bzw. Komfortreglers sein. Im Fall einer CVT-Kettenschlupfregelung, bei der die Variator-Anpressung moduliert wird, braucht die Variator-Anpressung nicht gleichzeitig die Stellgröße des adaptiven Filter bzw. Komfort-Reglers sein. Falls in einer konkreten Anwendung trotzdem die Gefahr besteht, dass das adaptive Filter bzw. der Komfortregler die Wirkung der Modulation so weitgehend kompensiert, daß das mit der Modulation angestrebte Ziel nicht erreicht werden kann, sollte das adaptive Filter bzw. der Komfortregler in seiner Wirkung begrenzt werden. Dieses kann z.B. im Falle des adaptiven Filters durch eine Begrenzung der Filterkoeffizienten erfolgen. Eine einfache Möglichkeit der Begrenzung besteht darin, jedem Filterkoeffizienten eine obere und eine untere Grenze fest zuzuweisen und dann, wenn eine Berechnung einen Koeffizientenwert außerhalb seiner Grenzen ergeben hat, ihn auf die nächstliegende Grenze zu setzen. Als Spezialfall können obere und untere Grenze eines Koeffizienten denselben Betrag, aber unterschiedliche Vorzeichen haben. Als weiterer Spezialfall können die oberen Grenzen aller Koeffizienten denselben Wert haben und / oder die unteren Grenzen aller Koeffizienten denselben Wert haben. Als weiterer Spezialfall können alle oder eine beliebige Untermenge der Grenzen in Abhängigkeit der aktuellen Betriebssituation gewählt werden, z.B. in Abhängigkeit der Amplitude oder der Form des Modulationssignals, falls dieses betriebssituationsabhängig verändert wird.

Je nach Triebstrangauslegung und Implementierung der adaptiven Filter bzw. Regelungen kann es sinnvoll sein, das adaptive Filter bzw. den Komfortregler in bestimmten Betriebssituationen auszuschalten und in anderen wieder einzuschalten. Enthält beispielsweise der Triebstrang ein Getriebe mit vom Verbrennungsmotor angetriebener Hydraulikpumpe und steht der Verbrennungsmotor, d.h. Motordrehzahl = 0, kann und sollte ein adaptives Filter bzw. ein Komfortregler, das bzw. der auf eine Stellgröße wirkt, die eine laufende Hydraulikpumpe Voraussetzt, unwirksam sein und abgeschaltet sein. Verwendet in einem anderen Beispiel ein adaptives Filter bzw. ein Komfortregler als Meßgröße einen oder mehrere Drehzahlwerte und ist die Drehzahlmessung bei kleinen Drehzahlen der sensierten Welle, einschließlich Stillstand, ungenau, kann / sollte das adaptives Filter bzw. der Komfortregler unwirksam sein und abgeschaltet sein.

Beim Einschalten oder Wieder-Einschalten sollten wesentliche interne Größen des Filters oder Reglers initialisiert sein oder werden. Im Fall des adaptiven Filters mit LMS-Algorithmus sollten z.B. die Filterkoeffizienten auf null oder einen anderen, ggf. betriebssituationsabhängigen sinnvollen Anfangswert gesetzt werden. Entsprechendes gilt für die Zustandsgrößen des Filters oder eines Reglers.

In den bisherigen Beispielen wird das Modulationssignal unabhängig vom adaptiven Filter generiert. In einer weiteren Ausführungsform der Erfindung stellt das adaptive Filter einem Modulationssignalgenerator interne Filter- bzw. Komfortregler-Größen, im Fall des adaptiven Filters z.B. die aktuellen Filterkoeffizienten, oder die Filter- bzw. Komfortregler-Stellgröße zur Verfügung. Der Regler, der das Modulationssignal erzeugt. kann diese Filter- bzw. Komfortregler-Größe(n) als alleinige Istgröße(n) oder zusätzlich zu der/den in der ersten Variante verwendeten Istgröße(n) verwenden.

Im Falle des adaptiven Filters kann der Regler, der das Modulationssignal erzeugt, eine Istgröße bzw. einen Ersatz für eine Istgröße z.B. auf folgende Weise erzeugen:
(a) Berechnung des Maximums aller Filterkoeffizienten oder Filter-Koeffizienten-Beträge,
(b) Berechnung der Summe aller Filterkoeffizienten oder Filter-Koeffizienten-Beträge,
(c) Berechnung einer gewichteten Summe aller Filterkoeffizienten oder Filter-Koeffizienten-Beträge, wobei jedem Filterkoeffizienten oder Filter-Koeffizienten-Betrag ein Gewichtsfaktor zugeordnet ist,
(d) Berechnung eines anderen mathematischen Ausdrucks aus den Filterkoeffizienten oder Filter-Koefflzienten-Beträgen. Unter Filter-Koeffizienten-Betrag wird hier z.B. die Wurzel aus der Summe der Quadrate zweier Filter- Koeffizienten verstanden wobei der eine die Bedeutung des Sinus und der andere die Bedeutung des Cosinus-Anteils eines Vektors hat.

Für den Fall des Kettenschlupfreglers mit adaptivem Filter bzw. Komfortregler kann dieses vereinfachend wie folgt ablaufen: Zunächst sei eine Überanpressung relativ hoch, die Modulation der Anpressung zeigt nur mäßige Wirkung im Triebstrang. Entsprechend einfach hat es das adaptive Filter bzw. der Komfortregler, die Störungen auszuregeln, die Koeffizienten und die Stellgrößen sind relativ klein. Diese Größen erkennt auch der Kettenschlupfregler, schließt daraus auf einen großen Abstand zur Schlupfgrenze und verringert die Anpressung. Mit Annäherung an die Schlupfgrenze wird die Wirkung der Anpressungsmodulation immer größer und die Koeffizienten und die Stellgröße des adaptiven Filters bzw. des Komfortreglers steigen. Bei Erreichen eines vorgegebenen Sollwertes senkt der Kettenschlupfregler die Anpressung nicht weiter ab. Falls die Koeffizienten bzw. die Stellgröße des adaptiven Filters bzw. Komfortreglers sogar oberhalb des Sollwertes liegen, hebt der Kettenschlupfregler die Anpressung entsprechend an.

### BEZUGSZEICHENLISTE

- 10: Antriebsstrang
- 12: Motor
- 14: Kupplung
- 16: automatisches Getriebe
- 18: Abtrieb
- 20: Antriebssteuerung
- 22, 24: Sensoren
- 26, 28, 30, 32: Aktuatoren
- 34: Lager
- 36: Karosserie

- 40: Ausschnitt einer Regelschleife
- 42: erster Eingang
- 44: adaptives Filter
- 46: Ausgang
- 48: Regelstrecke
- 50: Signalausgang
- 52: zweiter Eingang
- 54: Adaptierer
- 56: digitales Filter

## Patentansprüche

1. Verfahren zur Schwingungsdämpfung eines Antriebsstrangs (10) mit einem Motor (12) mit mindestens einer Kupplung (14) und einem Getriebe (16), insbesondere für ein Kraftfahrzeug, wobei der Antriebsstrang (10) mehrere Sensoren (22, 24) zur Aufnahme von Messgrößen und mehrere über Stellgrößen gesteuerte Aktuatoren (26, 28, 30, 32) aufweist, wobei eine Antriebssteuerung (20) des Antriebsstrangs (10) die Aktuatoren (26, 28, 30, 32) mittels der Stellgrößen unter Benutzung der Messgrößen der mehreren Sensoren (22, 24) koordiniert steuert, **dadurch gekennzeichnet, dass** die Messgrößen, die von Reaktionskräften und Momenten der Antriebsräder abhängen, die Aggregatelage, nämlich die Lage der Motor-Getriebe-Einheit gegenüber der Karosserie, die Kräfte in einem Aggregatelager und die Kräfte in einer Radaufhängung umfassen, wobei mindestens eine Stellgröße die Aggregatelagerung umfasst, und wobei die Schwingungen des Antriebsstrangs durch Steuerung der Aggregatelagerung und/oder der Aggregatelage, nämlich der Lagerung und/oder Lage der Motor-Getriebe-Einheit gedämpft werden.

2. Verfahren nach Anspruch 1, **dadurch gekennzeichnet, dass** die Antriebssteuerung (20) aktiv eine Schwingung über einzelne Aktuatoren (26, 28, 30, 32) im Antriebsstrang (10) anregt, die im gesamten Antriebsstrang zumindest teilweise kompensiert wird.

3. Verfahren nach Anspruch 2, **dadurch gekennzeichnet, dass** die aktiv angeregte Schwingung zur Ermittlung des Eingreifpunkts einer Kupplung eingesetzt wird und/oder die aktiv angeregte Schwingung zur Ermittlung des Schlupfes zwischen einem Umschlingungsmittel und einer Scheibe eines Variators eines Getriebes eingesetzt wird.

4. Verfahren nach Anspruch 2 oder 3, **dadurch gekennzeichnet, dass** eine Amplitude der aktiv angeregten Schwingung abhängig von mittels Meßgrößen detektierten Schwingungen gesteuert wird.

5. Verfahren nach Anspruch 2, 3 oder 4, **dadurch gekennzeichnet, dass** ein adaptives Filter (44), insbesondere mit einer Least Mean Square-Methode, zur Anregung der aktiv angeregten Schwingung eingesetzt wird.

6. Verfahren nach einem der Ansprüche 2 bis 5, **dadurch gekennzeichnet, dass** die aktive Anregung fahrzustandsabhängig ein- und ausgeschaltet wird.

7. Verfahren nach einem der vorstehenden Ansprüche, **dadurch gekennzeichnet, dass** die Antriebssteuerung eine Regelung für Sollgrößen für bestimmte Meßgrößen aufweist.

8. Verfahren nach einem der vorstehenden Ansprüche, **dadurch gekennzeichnet, dass** die Meßgrößen mehrere Elemente aufweisen aus mindestens einer der Gruppen
- Drehzahlen, umfassend Motor-, Kupplungs-Primär-, Eingangswellen-, Scheibensatz-, Triebwellen-, Abtriebs-, Rad-Drehzahlen;
- aus Drehzahl-Messgrößen berechnete Größen, umfassend Kupplungs-Schlupf, Variator-Übersetzung:
- Drehmomente, umfassend Drehmomente in einer jeweiligen Welle des Triebstrangs;
- Zwischengrößen in der Ansteuerkette, umfassend Ströme, Drücke, Wege der Kupplung, Ersatzgrößen der Kupplungskapazität

9. Verfahren nach einem der vorstehenden Ansprüche, **dadurch gekennzeichnet, dass** die Stellgrößen mehrere Elemente aufweisen aus mindestens einer der Gruppen
- Motordrehmoment-beeinflussende Größen, umfassend Zündwinkel, KraftstoffEinspritzmenge, Drosselklappenstellung, elektrischer Strom eines Elektromotors;
- Kupplungsdrehmoment-beeinflussende Größen, umfassend Kupplungsdruck, Kupplungsweg, Größen von Getriebe-Schaltelementen oder Radbremsen; Größen von Schaltelementen in Sperren;
- Schlupf beeinflussende Größen in schlupfenden Elementen, umfassend einen Anpreßdruck eines Variators;
- Übersetzung beeinflussende Größen, umfassend einen Verstelldruck eines Variators;
- Größen, die den Wirkungsgrad in Bezug auf die Antriebsleistung im Triebstrang beeinflussen, umfassend Anpreßkraft eines Variators, aufgenommene Generatorleistung, aufgenommene Klimakompressorleistung, Pumpenleistung, Schleppmomente in Reibelementen beeinflussende Größen;

10. Verfahren nach einem der vorstehenden Ansprüche, **dadurch gekennzeichnet, dass** mehrere Kupplungen koordiniert gesteuert werden.

11. Verfahren nach einem der vorstehenden Ansprüche, **dadurch gekennzeichnet, dass** ein mathematisches Modell des Antriebsstrangs erstellt wird, das der Antriebssteuerung zugrunde liegt.

12. Verfahren nach Anspruch 11, **dadurch gekennzeichnet, dass** die Antriebssteuerung mit dem Modell Zustandsgrößen schätzt, mit den aktuellen gemessenen Größen vergleicht und Abweichungen erkennt und verwertet.

13. Verfahren nach Anspruch 12, **dadurch gekennzeichnet, dass** eine Abweichung zur Fehlerbehandlung benutzt wird.

14. Verfahren nach Anspruch 12 oder 13, **dadurch gekennzeichnet, dass** wenn eine Abweichung einen Schwellwert erreicht, eine Fehlermeldung aktiviert wird.

15. Verfahren nach einem der vorstehenden Ansprüche 11 bis 13, **dadurch gekennzeichnet, dass** interne Modellgrößen durch Parameterschätzverfahren, insbesondere mittels einer Least Mean Square Methode, berechnet werden.

16. Verfahren nach einem der vorstehenden Ansprüche, **dadurch gekennzeichnet, dass** Dämpfung von Schwingungen des Antriebsstrangs durch eine geschlossene, zustandsgrößenbasierte Regelung, insbesondere mittels der Methode der Polstellenverschiebung durch Rückführung erfolgt.

17. Verfahren nach einem der vorstehenden Ansprüche, **dadurch gekennzeichnet, dass** eine definierte Störung in einem Aktuator oder einem Teilsystem angeregt wird, um das Schwingungsverhalten des Antriebsstrangszuermitteln.

18. Verfahren nach Anspruch 17, **dadurch gekennzeichnet, dass** die Antriebssteuerung für definierte Störungen vorbereitete Kompensationen enthält.

19. Verfahren nach einem der vorstehenden Ansprüche, **dadurch gekennzeichnet, dass** für den Antriebsstrang bestimmte Größen als Sollwerte vorgegeben werden, die von der Antriebssteuerung angestrebt werden sollen.

20. Verfahren nach Anspruch 19, **dadurch gekennzeichnet, dass** die Antriebssteuerung die vorgegeben Sollwerte auf vorbestimmten Trajektorien anstrebt.

21. Verfahren nach einem der vorstehenden Ansprüche, **dadurch gekennzeichnet, dass** Abtriebsdrehzahlen und/oder Abtriebsmomente in die Steuerung einbezogen werden.

22. Antriebsstrang (10), insbesondere für ein Kraftfahrzeug, mit einem Motor (12), mindestens einer Kupplung (14) und einem Getriebe (16), wobei der Antriebsstrang mehrere Sensoren (22, 24) zur Aufnahme von Meßgrößen und mehrere über Stellgrößen gesteuerte Aktuatoren (26, 28, 30, 32) aufweist, wobei der Antriebsstrang eine Antriebssteuerung (20) aufweist, die die Stellgrößen der Aktuatoren unter Benutzung der Meßgrößen der mehreren Sensoren koordiniert steuert **dadurch gekennzeichnet, dass** der Antreibsstrang (10) aktive Aggregatelager aufweisst und dass die Antriebssteuerung (20) gemäss dem Verfahren nach einem der Ansprüche 1 bis 21 arbeitet.

23. Antriebsstrang nach Anspruch 22, **dadurch gekennzeichnet, dass** die Antriebssteuerung eine Regelung für Sollgrößen für bestimmte Meßgrößen aufweist.

24. Antriebsstrang nach Anspruch 22 oder 23, **dadurch gekennzeichnet, dass** der Antriebsstrang mehrere Sensoren zur Aufnahme von Meßgrößen aufweist aus mindestens einer der Gruppen
- Drehzahlen, umfassend Motor-, Kupplungs-Primär-, Eingangswellen-, Scheibensatz-, Triebwellen-, Abtriebs-, Rad-Drehzahlen;
- aus Drehzahl-Messgrößen berechnete Größen, umfassend Kupplungs-Schlupf, variator-Übersetzung:
- Drehmomente, umfassend Drehmomente in einer jeweiligen Welle des Triebstrangs; und
- Meßgrößen, die von Reaktionskräften und Momenten der Antriebsräder abhängen, umfassend Aggregatelage, Kräfte in einem Aggregatelager, Kräfte in einer Radaufhängung.

25. Antriebsstrang nach einem der Ansprüche 22 bis 24, **dadurch gekennzeichnet, dass** der Antriebsstrang mehrere Aktuatoren zur Umsetzung von Stellgrößen aufweist aus mindestens einer der Gruppen
- Motordrehmoment-beeinflussende Größen, umfassend Zündwinkel, KraftstoffEinspritzmenge, Drosselklappenstellung, elektrischer Strom eines Elektromotors;
- Kupplungsdrehmoment-beeinflussende Größen, umfassend Kupplungsdruck, Kupplungsweg, Größen von Getriebe-Schaltelementen oder Radbremsen; Größen von Schaltelementen in Sperren;
- Schlupf beeinflussende Größen in schlupfenden Elementen, umfassend einen Anpreßdruck eines Variators;
- Übersetzung beeinflussende Größen, umfassend einen Verstelldruck eines Variator;
- Größen, die den Wirkungsgrad in Bezug auf die Antriebsleistung im Triebstrang beeinflussen, umfassend aufgenommene Generatorieistung, aufgenommene Klimakompressorleistung, Pumpenleistung, Schleppmomente in Reibelementen beeinflussende Größen;
- Aggregatelagerung.

26. Antriebsstrang nach einem der Ansprüche 22 bis 25, **dadurch gekennzeichnet, dass** das Getriebe ein automatisches oder automatisiertes Getriebe ist.

27. Antriebsstrang nach einem der Ansprüche 22 bis 26, **gekennzeichnet durch** mehrere Kupplungen, die koordiniert gesteuert wenden.

## Claims

1. Method for damping vibrations of a drive train (10) having an engine (12) with at least one clutch (14) and a transmission (16), in particular for a motor vehicle, with the drive train (10) having a plurality of sensors (22, 24) for recording measurement variables and a plurality of actuators (26, 28, 30, 32) which are controlled by means of actuating variables, with a drive control system (20) of the drive train (10) controlling, in a coordinated manner, the actuators (26, 28, 30, 32) by means of the actuating variables using the measurement variables of the plurality of sensors (22, 24), **characterized in that** the measurement variables, which are dependent on reaction forces and torques of the drive wheels, include the assembly position, specifically the position of the engine/transmission unit in relation to the vehicle body, the forces in an assembly mount and the forces in a wheel suspension system, with at least one actuating variable including the assembly mounting system, and with the vibrations of the drive train being damped by controlling the assembly mounting system and/or the assembly position, specifically the mounting system and/or position of the engine/transmission unit.

2. Method according to Claim 1, **characterized in that** the drive control system (20) actively initiates a vibration in the drive train (10) by means of individual actuators (26, 28, 30, 32), this vibration being at least partially compensated for throughout the drive train.

3. Method according to Claim 2, **characterized in that** the actively initiated vibration is used to determine the engagement point of a clutch and/or the actively initiated vibration is used to determine the slip between a wrap-around means and a disc of a variator of a transmission.

4. Method according to Claim 2 or 3, **characterized in that** an amplitude of the actively initiated vibration is controlled as a function of vibration which are detected by means of measurement variables.

5. Method according to Claim 2, 3 or 4, **characterized in that** an adaptive filter (44), in particular with a least mean squares method, is used to initiate the actively initiated vibration.

6. Method according to one of Claims 2 to 5, **characterized in that** the active initiation is switched on and off as a function of the driving state.

7. Method according to one of the preceding claims, **characterized in that** the drive control system has a regulation system for setpoint variables for specific measurement variables.

8. Method according to one of the preceding claims, **characterized in that** the measurement variables have a plurality of elements from at least one of the following groups
- rotation speeds, including motor rotation speeds, clutch primary rotation speeds, input shaft rotation speeds, disc set rotation speeds, drive shaft rotation speeds, output drive rotation speeds, wheel rotation speeds;
- variables calculated from rotation speed measurement variables, including clutch slip, variator transmission ratio;
- torques, including torques in a respective shaft of the drive train;
- intermediate variables in the actuation chain, including currents, pressures, instance of travel of the clutch, equivalent variables of the clutch capacity.

9. Method according to one of the preceding claims, **characterized in that** the actuating variables have a plurality of elements from at least one of the following groups
- variables which influence the engine torque, including ignition angle, fuel injection quantity, throttle valve position, electric current of an electric motor;
- variables which influence the clutch torque, including clutch pressure, clutch travel, variables of transmission shifting elements or wheel brakes; variables of shifting elements in locks;
- variables which influence slip in slipping elements, including a contact pressure of a variator;
- variables which influence the transmission ratio, including an adjustment pressure of a variator;
- variables which influence the degree of efficiency in relation to the drive power in the drive train, including contact force of a variator, recorded generator power, recorded air-conditioning compressor power, pump capacity, variables which influence drag torques in frictional elements.

10. Method according to one of the preceding claims, **characterized in that** a plurality of clutches are controlled in a coordinated manner.

11. Method according to one of the preceding claims, **characterized in that** a mathematical model of the drive train is created, this model being used as the basis for the drive control system.

12. Method according to Claim 11, **characterized in that** the drive control system uses the model to estimate state variables, compares state variables with the actually measured variables, and identifies and evaluates deviations.

13. Method according to Claim 12, **characterized in that** a deviation is used to trace faults.

14. Method according to Claim 12 or 13, **characterized in that** a fault message is activated when a deviation reaches a threshold value.

15. Method according to one of the preceding Claims 11 to 13, **characterized in that** internal model variables are calculated by parameter estimation methods, in particular by means of a least mean squares method.

16. Method according to one of the preceding claims, **characterized in that** vibrations of the drive train are damped by closed, state variable-based regulation, in particular by means of the method of pole shifting by feedback.

17. Method according to one of the preceding claims, **characterized in that** a defined disturbance is initiated in an actuator or a subsystem in order to determine the vibration behaviour of the drive train.

18. Method according to Claim 17, **characterized in that** the drive control system contains prepared compensations for defined disturbances.

19. Method according to one of the preceding claims, **characterized in that** variables which are intended for the drive train are predefined as setpoint values which arc to be strived for by the drive control system.

20. Method according to Claim 19, **characterized in that** the drive control system strives for the predefined setpoint values on predetermined trajectories.

21. Method according to one of the preceding claims, **characterized in that** the output drive rotation speeds and/or the output drive torques are included in the control.

22. Drive train (10), in particular for a motor vehicle, having a engine (12), at least one clutch (14) and a transmission (16), with the drive train having a plurality of sensors (22, 24) for recording measurement variables and a plurality of actuators (26, 28, 30, 32) which are controlled by means of actuating variables, with the drive train having a drive control system (20) which controls, in a coordinated manner, the actuating variables of the actuators using the measurement variables of the plurality of sensors, **characterized in that** the drive train (10) has active assembly mounts, and **in that** the drive control system (20) operates in accordance with the method according to one of Claims 1 to 21.

23. Drive train according to Claim 22, **characterized in that** the drive control system has a regulation system for setpoint variables for specific measurement variables.

24. Drive train according to Claim 22 or 23, **characterized in that** the drive train has a plurality of sensors for recording measurement variables from at least one of the following groups
- rotation speeds, including motor rotation speeds, clutch primary rotation speeds, input shaft rotation speeds, disc set rotation speeds, drive shaft rotation speeds, output drive rotation speeds, wheel rotation speeds;
- variables calculated from rotation speed measurement variables, including clutch slip, variator transmission ratio;
- torques, including torques in a respective shaft of the drive train; and
- measurement variables which are dependent on reaction forces and torques of the drive wheels, including assembly position, forces in an assembly mount, forces in a wheel suspension system.

25. Drive train according to one of Claims 22 to 24, **characterized in that** the drive train has a plurality of actuators for converting actuating variables from at least one of the following groups
- variables which influence the engine torque, including ignition angle, fuel injection quantity, throttle valve position, electric current of an electric motor;
- variables which influence the clutch torque, including clutch pressure, clutch travel, variables of transmission shifting elements or wheel brakes; variables of shifting elements in locks;
- variables which influence slip in slipping elements, including a contact pressure of a variator;
- variables which influence the transmission ratio, including an adjustment pressure of a variator;
- variables which influence the degree of efficiency in relation to the drive power in the drive train, including recorded generator power, recorded air-conditioning compressor powder, pump capacity, variables which influence drag torques in frictional elements;
- assembly mounting.

26. Drive train according to one of Claims 22 to 25, **characterized in that** the transmission is an automatic or automated transmission.

27. Drive train according to one of Claims 22 to 26, **characterized by** a plurality of clutches which are controlled in a coordinated manner.

## Revendications

1. Procédé d'amortissement de vibrations d'une chaîne d'entraînement (10) dotée d'un moteur (12) équipé d'au moins un embrayage (14) et d'une boîte de vitesses (16), notamment pour un véhicule automobile, la chaîne d'entraînement (10) comportant plusieurs capteurs (22, 24) pour enregistrer des grandeurs de mesure et plusieurs actionneurs (26, 28, 30, 32) commandés en fonction des grandeurs de mesure, une commande d'entraînement (20) de la chaîne d'entraînement (10) commandant de façon coordonnée les actionneur (26, 28, 30, 32) à l'aide de grandeurs de réglage en utilisant les grandeurs de mesure des multiples capteurs (22, 24), **caractérisé en ce que** les grandeurs de mesure dépendent des forces de réaction et des couples des roues d'entraînement, qui comprennent la position des agrégats, notamment la position de l'unité de boîte de vitesses du moteur par rapport à la carrosserie, les forces s'exerçant dans une position des agrégats et les forces s'exerçant dans une suspension de roue, au moins une grandeur de réglage comprenant le positionnement des agrégats, et les vibrations de la chaîne d'entraînement pouvant être amorties en commandant le positionnement des agrégats et/ou la position des agrégats, notamment le positionnement et/ou la position de l'unité de boite de vitesses du moteur.

2. Procédé selon la revendication 1, **caractérisé en ce que** la commande d'entraînement (20) stimule activement une vibration dans la chaîne d'entraînement (10) via les différents actionneurs (26, 28, 30, 32), ladite vibration étant compensée au moins en partie dans l'ensemble de la chaîne d'entraînement.

3. Procédé selon la revendication 2, **caractérisé en ce que** les vibrations stimulées activement sont utilisées pour déterminer le point d'intervention d'un embrayage et/ou les vibrations stimulées activement sont utilisées pour déterminer le glissement entre un moyen d'enlacement et un disque d'un variateur d'une boîte de vitesses.

4. Procédé selon la revendication 2 ou 3, **caractérisé en ce qu'**une amplitude des vibrations stimulées activement est commandée en fonction des vibrations détectées à l'aide des grandeurs de mesure.

5. Procédé selon la revendication 2, 3 ou 4, **caractérisé en ce qu'**on utilise un filtre (44) adaptatif, utilisant notamment la méthode des moindres carrés moyens, pour stimuler les vibrations stimulées activement.

6. Procédé selon l'une quelconque des revendications 2 à 5, **caractérisé en ce que** la stimulation active est activée et désactivée en fonction de l'état de la conduite.

7. Procédé selon l'une quelconque des revendications précédentes, **caractérisé en ce que** la commande d'entraînement comprend un réglage pour les grandeurs théoriques de grandeurs de mesure données.

8. Procédé selon l'une quelconque des revendication précédentes, **caractérisé en ce que** les grandeurs de mesure comprennent plusieurs éléments appartenant au moins à un des groupes suivants :
- les vitesses de rotation, comprenant les vitesses de rotation du moteur, de l'embrayage primaire, des arbres d'entrée, du jeu de disques, des arbres d'entraînement, de l'entraînement de sortie, des roues ;
- les grandeurs calculées à partir des grandeurs de mesure de la vitesse de rotation, comprenant le glissement de l'embrayage, la démultiplication du variateur ;
- les couples de rotation, comprenant les couples de rotation d'un arbre respectif de la chaîne d'entraînement ;
- les grandeurs intermédiaires de la chaîne d'entraînement, comprenant les courants, les pressions, les différentes voies d'embrayage, les grandeurs de remplacement de la capacité de l'embrayage.

9. Procédé selon l'une quelconque des revendications précédentes, **caractérisé en ce que** les grandeurs de mesure comportent plusieurs éléments parmi lesquels au moins un des groupes suivants :
- les grandeurs influençant le couple de rotation du monteur, comprenant l'angle d'allumage, la quantité de carburant injectée, le positionnement du papillon, le courant électrique d'un moteur électrique ;
- les grandeurs influençant le couple de rotation de l'embrayage, comprenant la pression de l'embrayage, la voie d'embrayage, les grandeurs des éléments de commutation de la boîte de vitesses ou des freins de roue ; les grandeurs des éléments de commutation dans les dispositifs d'arrêt ;
- les grandeurs influençant le glissement dans les éléments glissants, comprenant une pression de compression d'un variateur ;
- les grandeurs influençant la démultiplication, comprenant une pression de réglage d'un variateur ;
- les grandeurs influençant le degré d'efficacité de la puissance d'entraînement dans la chaîne d'entraînement, comprenant la force de compression d'un variateur, la puissance absorbée du générateur, la puissance absorbée du compresseur de climatisation, la puissance de la pompe, les couples d'entraînement dans les grandeurs influençant les éléments de glissement.

10. procécé selon l'une quelconque des revendication précédentes, **caractérisé en ce que** plusieurs embrayages peuvent être commandés de façon coordonnée.

11. Procédé selon l'une quelconque des revendications précédentes, **caractérisé en ce qu'**un modèle mathématique de la chaîne d'entraînement est déterminé, ledit modèle prenant pour fondement la commande d'entraînement.

12. Procédé selon la revendication 11, **caractérisé en ce que** la commande d'entraînement évalue avec le modèle les grandeurs d'état, les compare aux grandeurs mesurées réelles et détecte et met en valeur les écarts.

13. Procédé selon la revendication 12, **caractérisé en ce qu'**un écart est utilisé pour traiter les erreurs.

14. Procédé selon la revendication 12 ou 13, **caractérisé en ce que** lorsqu'un écart atteint une valeur seuil, un message d'erreur est activé.

15. Procédé selon l'une quelconque des revendications 11 à 13, **caractérisé en ce que** des grandeurs modèles internes sont calculées à l'aide d'un procédé d'évaluation des paramètres, notamment à l'aide d'une méthode des moindres carrés moyens.

16. Procédé selon l'une quelconque des revendications précédentes, **caractérisé en ce que** l'amortissement des vibrations de la chaîne d'entraînement est réalisée par rétraction à l'aide d'un réglage fermé basé sur les grandeurs d'état, notamment à l'aide de la méthode de déplacement des pôles.

17. Procédé selon l'une quelconque des revendications précédentes, **caractérisé en ce qu'**une perturbation définie est stimulée dans un actionneur ou dans une partie du système, pour déterminer le comportement aux vibrations de la chaîne d'entraînement.

18. Procédé selon la revendication 17, **caractérisé en ce que** la commande d'entraînement contient des compensations préparées à l'avance pour des perturbations définies.

19. Procédé selon l'une quelconque des revendications précédentes, **caractérisé en ce que** des grandeurs définies sont données au préalable comme valeurs théoriques pour la chaîne d'entraînement, lesdites grandeurs devant être stimulées par la commande d'entraînement.

20. Procédé selon la revendication 19, **caractérisé en ce que** la commande d'entraînement stimule les valeurs théoriques fournies au préalable sur des trajectoires prédéfinies.

21. Procédé selon l'une quelconque des revendications précédentes, **caractérisé en ce que** les vitesses de rotation de l'entraînement de sortie et/ou les couples de l'entraînement de sortie sont inclus dans la commande.

22. Chaîne d'entraînement (10), notamment pour un véhicule automobile, avec un moteur (12), au moins un embrayage (14) et une boîte de vitesse (16), la chaîne d'entraînement comportant plusieurs capteurs (22, 24) pour enregistrer des grandeurs de mesure et plusieurs actionneurs (26, 28, 30, 32) commandés par l'intermédiaire de valeurs de réglage, la chaîne d'entraînement comportant une commande d'entraînement (20) qui commande de façon coordonnée les grandeurs de réglage des actionneurs en utilisant les grandeurs de mesure des multiples capteurs, **caractérisée en ce que** la chaîne d'entraînement (10) comporte des supports d'agrégats et que la commande d'entraînement (20) fonctionne selon le procédé selon l'une quelconque des revendications 1 à 21.

23. Chaîne d'entraînement selon la revendication 22, **caractérisée en ce que** la commande d'entraînement comprend un réglage des grandeurs théoriques pour des grandeurs de mesure données.

24. Chaîne d'entraînement selon la revendication 22 ou 23, **caractérisée en ce que** la chaîne d'entraînement comprend plusieurs capteurs pour enregistrer les grandeurs de mesure faisant partie d'au moins un des groupes suivants :
- les vitesses de rotation, comprenant les vitesses de rotation du moteur, de l'embrayage primaire, des arbres d'entrée, du jeu de disques, des arbres d'entraînement, de l'entraînement de sortie, des roues ;
- les grandeurs calculées à partir des grandeurs de mesure de la vitesse de rotation, comprenant le glissement de l'embrayage, la démultiplication du variateur ;
- les couples de rotation, comprenant les couples de rotation d'un arbre respectif de la chaîne d'entraînement ;
- les grandeurs de mesure dépendant des forces de réaction et des couples des roues d'entraînement, comprenant la position des agrégats, les forces s'exerçant dans le positionnement des agrégats, les forces s'exerçant dans une suspension de roue.

25. Chaîne d'entraînement selon l'une quelconque des revendications 22 à 24, **caractérisé en ce que** la chaîne d'entraînement comprend plusieurs actionneurs pour transformer les grandeurs de réglage appartenant à au moins un des groupes suivants :
- les grandeurs influençant le couple de rotation du moteur, comprenant l'angle d'allumage, la quantité de carburant injectée, le positionnement du papillon, le courant électrique d'un moteur électrique ;
- les grandeurs influençant le couple de rotation de l'embrayage, comprenant la pression de l'embrayage, la voie d'embrayage, les grandeurs des éléments de commutation de la boite de vitesses ou des freins de roue ; les grandeurs des éléments de commutation dans les dispositifs d'arrêt ;
- les grandeurs influençant le glissement dans les éléments glissants, comprenant une pression de compression d'un variateur ;
- les grandeurs influençant la démultiplication, comprenant une pression de réglage d'un variateur ;
- les grandeurs influençant le degré d'efficacité de la puissance d'entraînement dans la chaîne d'entraînement, comprenant la force de compression d'un variateur, la puissance absorbée du générateur, la puissance absorbée du compresseur de climatisation, la puissance de la pompe, les couples d'entraînement dans les grandeurs influençant les éléments de glissement ;
- le positionnement des agrégats.

26. Chaîne d'entraînement selon l'une quelconque des revendications 22 à 25, **caractérisée en ce que** la boite de vitesses est une boite de vitesses automatique ou automatisée.

27. Chaîne d'entraînement selon l'une quelconque des revendications 22 à 26, **caractérisée par** plusieurs embrayages commandés de façon coordonnée.
